# DEMANDE DE BREVET EUROPEEN

(11) **EP 1 927 445 A1**
(43) Date de publication de la demande: **04.06.2008**
(21) Numéro de dépôt: 07301596.8
(22) Date de dépôt: 29.11.2007
(51) Int. Cl.: B27L 7/00, F16P 3/02, F16P 3/04

(54) **Fendeuse à bois**

(30) Priorité: 30.11.2006 FR 0655223
(71) Demandeur: Dalla Santa Bruno, 33370 Artigues Pres Bordeaux (FR)
(72) Inventeur: DALLA SANTA, Bruno, 33310, LORMONT (FR)
(74) Mandataire: Fantin, Laurent

(57) **Abrégé**

L'objet de l'invention est une fendeuse à bois plus particulièrement destinée à la fente de merrains, de tavillons, de bardeaux ou analogue, comportant un bâti supportant un actionneur (26) susceptible d'entraîner selon une direction de translation (30) un coin (28), caractérisée en ce qu'elle comprend des moyens de protection (36) du coin susceptible de se translater de manière synchronisée avec le coin ainsi que des moyens de détection (38) comprenant au moins un élément mobile par rapport à au moins un autre élément (36), ledit au moins un élément mobile ayant une partie décalée vers le bas par rapport à la partie inférieure de l'autre élément (36), et d'autre part au moins un capteur susceptible de détecter un mouvement relatif de l'élément mobile par rapport à l'autre élément (36) et d'arrêter la translation du coin (28) lorsque lesdits moyens de détection rencontrent un obstacle.

## Description

La présente invention se rapporte à une fendeuse à bois plus particulièrement destinée à la fente de merrains, de tavillons, de bardeaux ou analogue.

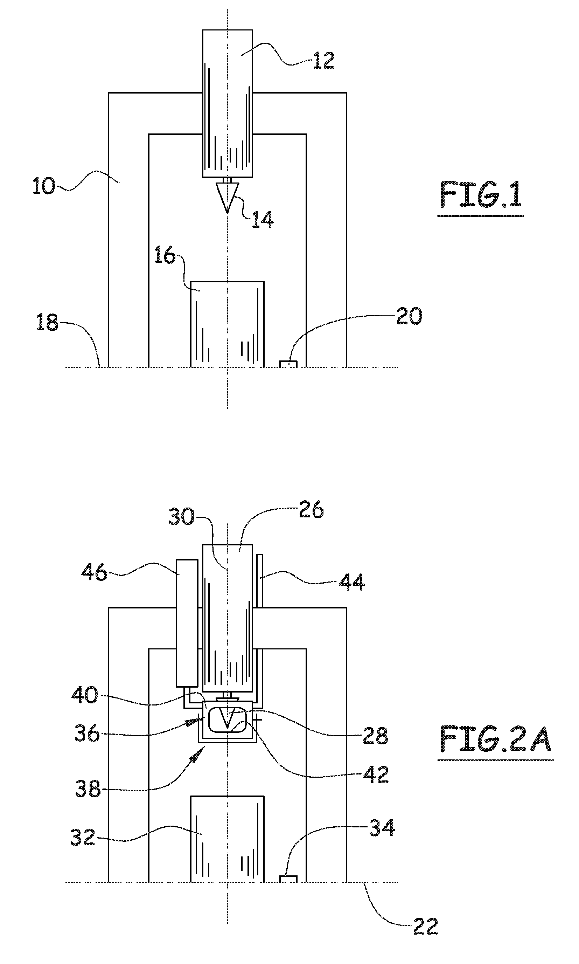

Sur la figure 1, on a représenté de manière schématique une fendeuse selon l'art antérieur. Elle comprend un châssis 10 sous forme d'un portique supportant un actionneur 12 sous la forme d'un vérin hydraulique par exemple, un coin 14 étant fixé à l'extrémité inférieure de l'arbre de l'actionneur 12. Ce coin 14 peut se translater grâce à l'actionneur selon une direction sensiblement verticale, de haut en bas, afin de fendre une bille de bois 16 reposant sur un socle 18, à l'aplomb de l'actionneur 12. Une commande 20 sous forme d'une pédale est prévue pour déclencher le mouvement de translation du coin 14 vers le bas.

Généralement pour la fente de merrains, l'utilisateur commande la descente du coin et l'arrête à proximité de la bille de bois afin de la positionner de manière adéquate par rapport au coin pour fendre de façon optimale les merrains. Une fois la bille correctement positionnée, l'utilisateur commande la descente du coin qui fend alors la bille selon l'emplacement défini.

Ce type de fendeuse de conception simple et robuste ne donne pas pleinement satisfaction en matière de sécurité.

En effet, l'utilisateur peut déclencher de manière inopinée le mouvement de descente vers le bas du coin et laisser un de ses membres sous le coin provoquant de graves blessures.

Selon une autre contrainte liée à la fente de merrains, l'ensemble ne peut pas être disposé dans une cage, l'opérateur ayant besoin d'ajuster de manière précise la position du coin par rapport à la bille de bois.

Aussi, la présente invention vise à pallier les inconvénients de l'art antérieur en proposant une fendeuse de bois limitant les risques de blessures. Selon un autre objectif, le système de sécurité ajouté doit comme pour le reste de la fendeuse être de conception simple, robuste et fiable.

A cet effet, l'invention a pour objet une fendeuse à bois plus particulièrement destinée à la fente de merrains, comportant un bâti supportant un actionneur susceptible d'entraîner selon une direction de translation un coin, caractérisée en ce qu'elle comprend des moyens de protection du coin susceptible de se translater de manière synchronisée avec le coin ainsi que des moyens de détection comprenant au moins un élément mobile par rapport à au moins un autre élément, ledit au moins un élément mobile ayant une partie décalée vers le bas par rapport à la partie inférieure de l'autre élément, et d'autre part au moins un capteur susceptible de détecter un mouvement relatif de l'élément mobile par rapport à l'autre élément et d'arrêter la translation du coin lorsque lesdits moyens de détection rencontrent un obstacle.

D'autres caractéristiques et avantages ressortiront de la description qui va suivre de l'invention, description donnée à titre d'exemple uniquement, en regard des dessins annexés sur lesquels :
- la figure 1 est une représentation schématique d'une fendeuse selon l'art antérieur,
- les figures 2A à 2D sont des représentations schématiques d'une fendeuse selon l'invention à différentes étapes d'une opération de fente,
- la figure 3A est une vue en élévation latérale des moyens de protection au repos ou en cours de descente,
- la figure 3B est une vue en élévation latérale des moyens de protection au contact d'un obstacle, et
- la figure 4 est une vue schématique illustrant une variante de l'invention.

Sur les figures 2A à 2D, on a représenté une fendeuse comportant un socle 22 surmonté d'un châssis 24 sous la forme d'un portique, supportant un actionneur 26. Selon un mode de réalisation connu, l'actionneur 26 se présente sous la forme d'un vérin hydraulique avec un arbre à l'extrémité libre duquel est prévu un coin 28. Ainsi, le coin 28 peut se translater selon un axe 30 sensiblement vertical, de haut en bas, afin de fendre une bille de bois 32 ou analogue disposée sur le socle, à l'aplomb du coin. Avantageusement, le coin est rapporté à l'extrémité de l'arbre du vérin de manière démontable pour pouvoir le changer.

La fendeuse comprend également des moyens de commande 34 pour déclencher la translation du coin 28.

En complément, la fendeuse comprend les systèmes hydrauliques adéquats pour assurer la gestion des fluides.

Tous ces éléments sont connus de l'homme de l'art et ne sont pas plus détaillés. Par ailleurs, l'invention n'est pas limitée à ce mode de réalisation, d'autres solutions techniques peuvent être envisagées pour entraîner en translation le coin 28 selon une direction sensiblement verticale, de haut en bas.

La présente invention se rapporte plus précisément à une fendeuse utilisée pour la fente de merrains, de tavillons, de bardeaux ou analogue. Néanmoins, elle n'est pas limitée à cette application.

Selon l'invention, la fendeuse comprend des moyens de protection 36 ainsi que des moyens de détection 38 d'un obstacle susceptibles de commander l'arrêt de la translation du coin 28.

Selon un mode de réalisation, les moyens 36 de protection comprennent un cylindre creux 40 dans lequel est susceptible d'être logé le coin 28. Ce cylindre peut ou non comprendre, au niveau de la paroi périphérique, au moins une fenêtre 42 permettant de visualiser le coin 28. Toutefois, l'invention n'est pas limitée à ce mode de réalisation.

Les moyens de protection peuvent se translater selon une direction sensiblement verticale confondue avec l'axe 30 de translation du coin 28. Des moyens de guidage 44, par exemple sous forme d'au moins une glissière, sont de préférence prévus pour guider les moyens de protection selon l'axe 30 de translation.

Au moins un actionneur 46 est prévu pour assurer la translation des moyens de protection 36 selon l'axe 30 de translation. Selon un mode de réalisation, l'actionneur 46 se présente sous la forme d'un vérin hydraulique solidarisé au châssis de la fendeuse dont la tige est reliée aux moyens de protection. Des systèmes hydrauliques sont prévus pour assurer la gestion des fluides.

Toutefois, d'autres solutions techniques peuvent être envisagées pour assurer la translation selon l'axe 30 de translation des moyens de protection 36. Ainsi, l'actionneur 26 du coin pourrait être utilisé pour assurer la translation avec un système de débrayage pour désaccoupler les moyens de protection lorsque le coin 28 pénètre dans la bille en bois.

Selon l'invention, le mouvement de translation des moyens de protection 36 est synchronisé avec le mouvement de translation du coin 28 durant la phase d'approche.

Avantageusement, les moyens de détection 38 sont prévus en partie inférieure des moyens de protection 36 et sont susceptibles d'arrêter la translation du coin 28 lorsqu'ils viennent en contact avec un obstacle.

De préférence, l'extrémité inférieure du coin 28 est décalée vers le haut par rapport à l'extrémité inférieure des moyens de protection pour prévoir toujours un espace entre le coin et l'obstacle lorsque les moyens de détection 38 provoquent l'arrêt de la translation du coin.

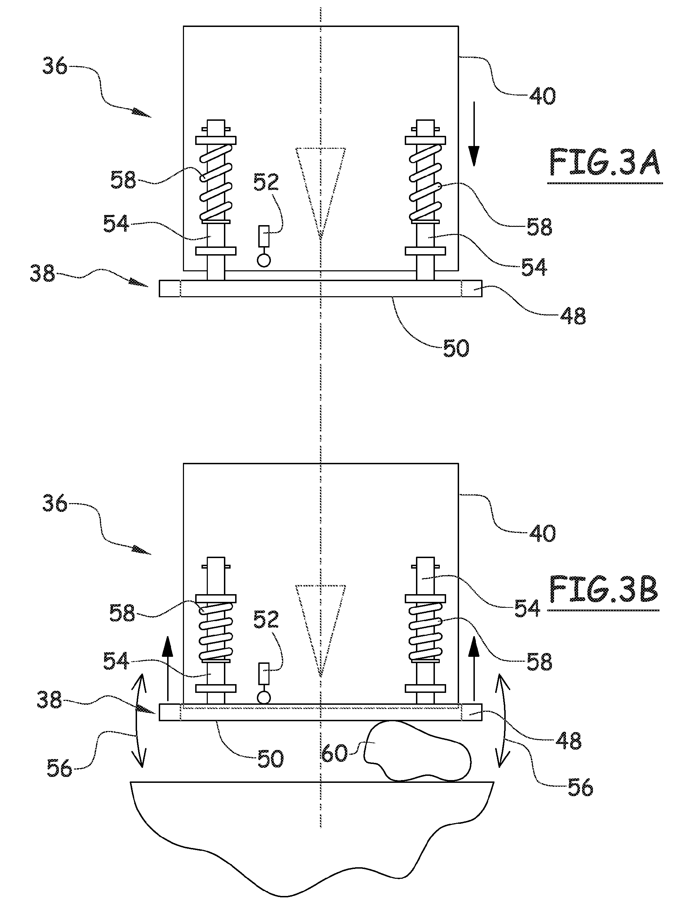

Comme illustré sur les figures 3A et 3B, les moyens de détection 38 comprennent d'une part au moins un élément mobile, de préférence une couronne 48, par rapport à au moins un autre élément notamment par rapport aux moyens de protection 36 dont le plan de contact inférieur 50 est décalé vers le bas par rapport à la partie inférieure desdits moyens de protection 36, et d'autre part au moins un capteur 52 solidaire des moyens de protection 36 susceptible de détecter un mouvement relatif de la couronne 48 par rapport aux moyens de protection 36.

L'élément mobile n'est pas limité à la forme en couronne. Cependant, la forme en couronne est plus particulièrement adaptée lorsque l'élément fixe a une forme cylindrique.

Selon un mode de réalisation, la couronne 48 peut coulisser de manière concentrique par rapport au cylindre creux 40 le long d'au moins une glissière 54. En variante, la liaison entre la couronne 48 et les moyens de protection 36 pourrait permettre à ladite couronne 48 de pouvoir s'incliner par rapport à un plan horizontal comme indiqué par les flèches 56. Dans ce cas, un capteur 52 est prévu au niveau de chaque glissière 54.

Des moyens de rappel 58, par exemple des ressorts de compression, sont prévus pour maintenir la couronne 48 en position basse, écartée du capteur 52. Ainsi, lorsque la couronne rencontre un obstacle 60, elle tend à se déplacer par rapport aux moyens de protection 36 en comprimant les moyens de rappel 58.

A titre d'exemple, le capteur 52 se présente sous la forme d'un contacteur.

Selon un autre mode de réalisation, on peut prévoir au moins un capteur de type sans contact, par exemple un capteur inductif ou à faisceau lumineux.

Selon un autre agencement, ledit au moins un capteur peut être solidaire des moyens de protection et détecter le mouvement de tout élément cinématiquement lié à la couronne tel que par exemple une glissière 54. Ainsi, ledit au mois un capteur peut être décalé vers le haut par rapport à l'extrémité supérieure d'une glissière lorsque la couronne est en position basse. Selon cet agencement, lorsque la couronne rencontre un obstacle, les glissières 54 se translatent vers le haut. A partir d'un certain seuil, la glissière 54 concernée coupe le faisceau lumineux du capteur 52 qui commande alors l'arrêt du coin 28.

Cependant d'autres solutions techniques peuvent être envisagées pour détecter le mouvement relatif de la couronne 48 par rapport aux moyens de protection 36.

A l'image du reste de la fendeuse, la solution de sécurité proposée est robuste et fiable. Par ailleurs, elle est parfaitement adapté à l'environnement des fendeuse à bois qui peut être très poussiéreux.

Le fonctionnement de la fendeuse selon l'invention est maintenant décrit au regard des figures 2A à 2D, 3A et 3B.

En position repos, comme illustré sur la figure 2A, le coin est en position haute. Les moyens de protection 36 entourent le coin 28. De préférence, l'extrémité inférieure du coin est décalée vers le haut par rapport à l'extrémité inférieure des moyens de protection 36.

Pour faire descendre le coin 28, l'utilisateur appuie sur la commande 34. Le coin 28 se translate alors vers le bas selon l'axe 30 de translation vertical. Les moyens de protection 36 se translatent de manière synchronisée par rapport au coin 28 afin que ce dernier soit toujours entouré des moyens de protection 36 durant cette phase d'approche.

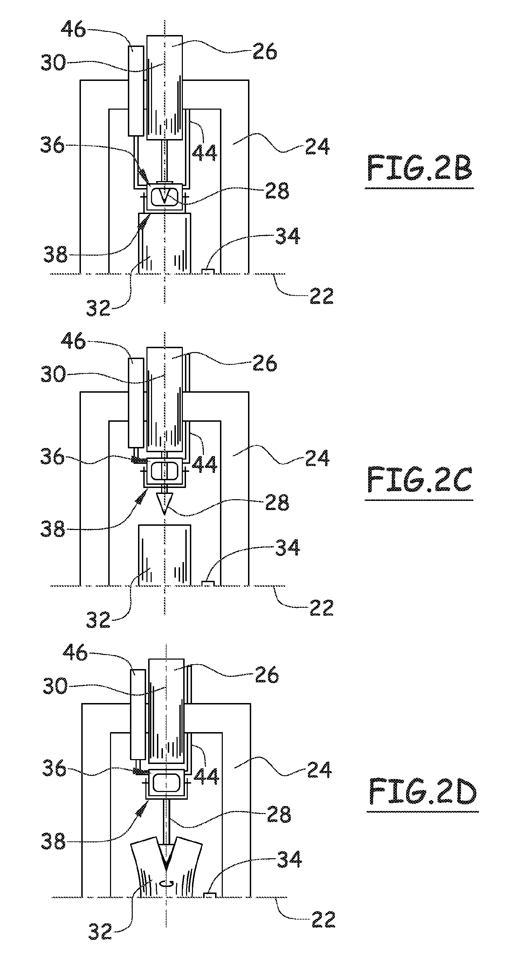

Lorsque la couronne 48 rencontre un obstacle 60 ou la bille de bois, comme illustré sur les figures 2B et 3B, elle se déplace vers le haut à l'encontre des moyens de rappel 58. A partir d'un certain seuil éventuellement réglable, le capteur 52 détecte ce mouvement et commande l'arrêt de la translation vers le bas du coin 28 et des moyens de protection 36.

L'extrémité inférieure étant légèrement décalée vers le haut par rapport à l'extrémité inférieure des moyens de protection 36, les risques de blessures sont donc limités, comme illustré sur la figure 3B.

En suivant, les moyens de protection se translatent vers le haut pour venir en position repos, comme illustré sur la figure 2C.

L'utilisateur peut alors positionner la bille de bois afin d'optimiser la fente du merrain.

Dès que la bille de bois est correctement positionnée, l'opérateur déclenche la descente du coin 28 grâce à la commande 34, comme illustré sur la figure 2D. A cet instant, les risques de blessure sont limités car le coin 28 est très proche de la bille.

Après avoir fendu la bille de bois, le coin 28 se translate vers le haut en position repos ou pour le départ d'un nouveau cycle.

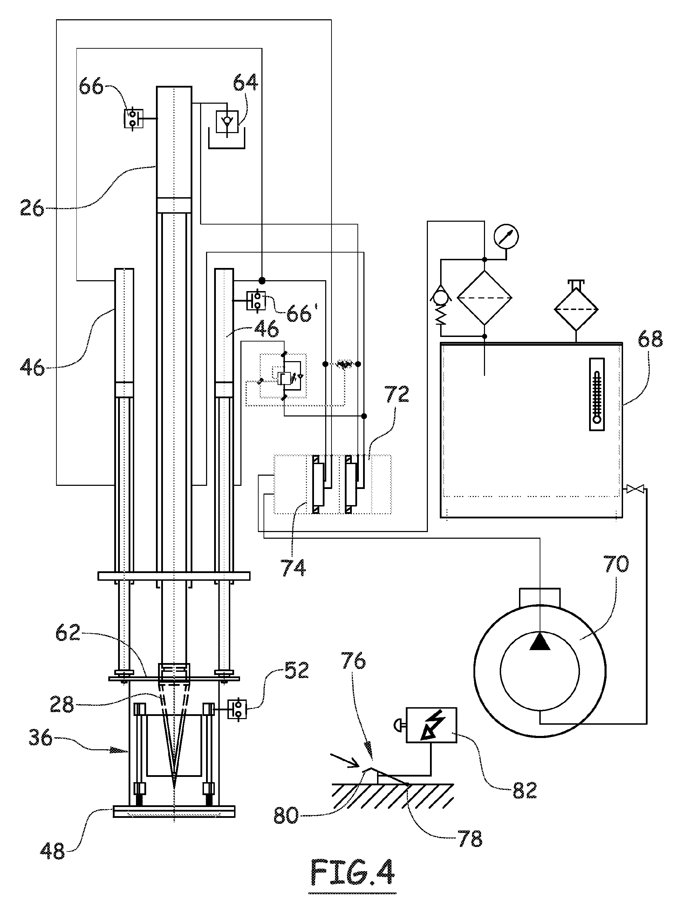

Sur la figure 4, on a représenté en détails le schéma d'une fendeuse. On retrouve un actionneur principal 26 avec une tige à l'extrémité libre de laquelle est prévu un coin 28. Ce coin est protégé par des moyens de protection 36 sous forme d'un cylindre creux fixé à l'extrémité inférieure des tiges de deux actionneurs secondaires 46 disposés de part et d'autre de l'actionneur principal 26.

Avantageusement, les moyens de protection 36 comprennent une zone d'appui 62 permettant d'entraîner vers le bas le coin 28 ou la tige supportant le coin 28. En complément, l'actionneur principal 26 comprend un système d'auto aspiration 64 permettant un remplissage d'une de ses chambres, lorsque le coin 28 est entraîné par les moyens de protection 36.

Les moyens de protection 36 supportent en partie inférieure une couronne 48 susceptible de se translater vers le haut à l'encontre de moyens de rappel. Un contacteur 52 permet de détecter le mouvement relatif entre la couronne 48 et les moyens de protection 36 lorsque cette dernière rencontre un obstacle.

Selon ce mode de réalisation, les actionneurs 26 et 46 sont de type hydraulique et comprennent de préférence des capteurs de fin de course 66 et 66' pour détecter la position rétractée de leurs tiges.

La fendeuse comprend également un réservoir 68 et une pompe 70 pour alimenter via un premier distributeur 72 l'actionneur principal 26 et via un second distributeur 74 les deux actionneurs secondaires 46.

La commande 34 comprend une pédale 76 avec un axe de rotation 78 et une zone 80 d'appui pour le pied opposée à l'axe de rotation 78, ladite pédale étant associée à des moyens de détection de la variation angulaire de ladite pédale, par exemple un potentiomètre 82.

Avantageusement pour offrir une meilleure sensibilité, la pédale 76 a une forme en V inversé, l'extrémité libre d'une branche étant reliée à l'axe de rotation 78, l'autre branche servant de zone d'appui 80.

Avantageusement, la vitesse de déplacement vers le bas ou le déplacement vers le bas de l'actionneur principal 26 est proportionnel à la position angulaire de la pédale 76 pour obtenir une commande sensitive de la descente du coin 28.

Le principe de fonctionnement de la fendeuse est maintenant décrit.

Lorsque l'utilisateur actionne la commande 34, le distributeur 74 commande la descente des actionneurs 46 secondaires. Les moyens de protection 36 se translatent vers le bas en entrainant le coin 28.

Lorsque la couronne 48 vient en contact avec une bille de bois, elle se translate par rapport aux moyens de protection 36. Ce mouvement relatif est détecté par le contacteur 52 qui commande le changement d'état du distributeur 74 provoquant alors la remontée des moyens de protection 36 jusqu'à la position rétractée détectée par le capteur 66'. L'actionneur principal 26 et le coin restent immobiles. Le coin est disposé à une faible distance de la bille de bois.

Une fois qu'il a positionné correctement le coin par rapport à la bille, l'utilisateur commande la descente du coin 28 en appuyant sur la pédale 76. L'appui sur ladite pédale 76 commande le distributeur 72 qui provoque la sortie de la tige de l'actionneur principal 26. La translation du coin 28 est proportionnelle à la variation angulaire de la pédale 76.

En relâchant la pédale 76, le distributeur 72 change d'état et commande la remontée du coin 28 jusqu'à la position rétractée de la tige qui est détectée par le capteur 66.

A tout moment, un appui brusque sur la pédale 76 provoque l'arrêt ou la remontée immédiate du coin 28 et la mise à défaut du cycle.

## Revendications

1. Fendeuse à bois plus particulièrement destinée à la fente de merrains, de tavillons, de bardeaux ou analogue, comportant un bâti (24) supportant un actionneur (26) susceptible d'entraîner selon une direction de translation (30) un coin (28), **caractérisée en ce qu'**elle comprend des moyens de protection (36) du coin susceptible de se translater de manière synchronisée avec le coin ainsi que des moyens de détection (38) comprenant au moins un élément mobile (48) par rapport à au moins un autre élément (36), ledit au moins un élément mobile (48) ayant une partie décalée vers le bas par rapport à la partie inférieure de l'autre élément (36), et d'autre part au moins un capteur (52) susceptible de détecter un mouvement relatif de l'élément mobile (48) par rapport à l'autre élément (36) et d'arrêter la translation du coin (28) lorsque lesdits moyens de détection rencontrent un obstacle.

2. Fendeuse à bois selon la revendication 1, **caractérisée en ce que** les moyens de protection (36) se présentent sous la forme d'un cylindre creux (40) dont la paroi périphérique entoure le coin (28).

3. Fendeuse à bois selon la revendication 1 ou 2, **caractérisée en ce que** les moyens de détection (38) comprennent une couronne (48) mobile par rapport aux moyens de protection (36).

4. Fendeuse à bois selon l'une quelconque des revendications 1 à 3, **caractérisée en ce que** la liaison entre l'élément mobile (48) et les moyens de protection (36) permettent audit élément mobile (48) de pouvoir s'incliner par rapport à un plan horizontal.

5. Fendeuse à bois selon la revendication 3 ou 4, **caractérisée en ce que** les moyens de détection (38) comprennent des moyens de rappel (58) tendant à maintenir l'élément mobile en position basse.

6. Fendeuse à bois selon l'une quelconque des revendications précédentes, **caractérisée en ce que** les moyens de protection (36) sont positionnés de manière adéquate par rapport au coin (28) de manière à ce que l'extrémité inférieure dudit coin soit décalée vers le haut par rapport à l'extrémité inférieure des moyens de protection (36).

7. Fendeuse à bois selon l'une quelconque des revendications précédentes, **caractérisée en ce que** les moyens de protection (36) comprennent une zone d'appui (62) permettant d'entraîner vers le bas le coin (28) ou la tige supportant le coin (28).

8. Fendeuse à bois selon l'une quelconque des revendications précédentes, **caractérisée en ce qu'**elle comprend une commande (34) comprenant une pédale (76) et des moyens de détection de la variation angulaire de la pédale permettant de commander la descente du coin en fonction de la position angulaire de ladite pédale.

9. Fendeuse à bois selon l'une quelconque des revendications précédentes, **caractérisée en ce qu'**elle comprend une commande (34) comprenant une pédale (76) avec une forme en V inversé, l'extrémité libre d'une branche étant reliée à un axe de rotation (78), l'autre branche servant de zone d'appui (80).
